# EUROPÄISCHE PATENTSCHRIFT

(11) **EP 2 556 345 B1**
(45) Veröffentlichungstag und Bekanntmachung des Hinweises auf die Patenterteilung: **12.06.2019**
(21) Anmeldenummer: 11717935.8
(22) Anmeldetag: 06.04.2011
(51) Int. Cl.: G01G 3/12, G01G 21/30, G01G 23/00

(54) **HERMETISCHE WÄGEZELLE MIT ÜBERLASTSICHERUNG**
HERMETIC WEIGHING CELL HAVING OVERLOAD PROTECTION
CELLULE DE PESAGE HERMÉTIQUE AVEC SÉCURITÉ DE SURCHARGE

(30) Priorität: 07.04.2010 DE 102010014152
(43) Veröffentlichungstag der Anmeldung: 13.02.2013
(73) Patentinhaber: Hottinger Baldwin Messtechnik GmbH, 64293 Darmstadt (DE)
(72) Erfinder: SCHMITTNER, Arno, 89551 Königsbronn (DE); SCHERER, Ralf, 55128 Mainz (DE)
(74) Vertreter: Staudte, Ralph
(86) Internationale Anmeldenummer: PCT/EP2011/001701
(87) Internationale Veröffentlichungsnummer: WO 2011/124364

(56) Entgegenhaltungen:
- EP-A1- 2 120 023
- EP-A2- 0 816 812
- DE-A1-102004 027 619
- GB-A- 2 150 307

## Beschreibung

Die Erfindung betrifft eine Wägezelle gemäß dem Oberbegriff des Patentanspruchs 1.

Wägezellen sind Sonderformen der Kraftaufnehmer und zum Aufbau von Wägevorrichtungen vorgesehen. Derartige Wägevorrichtungen werden häufig auch bei der Lebensmittelversorgung eingesetzt, so dass sie oft besonderen Hygienevorschriften genügen müssen. Deshalb ist es auch bei den dort verwendeten Wägezellen notwendig, dass diese so aufgebaut sind, dass sich an ihren Oberflächen kein Schmutz und keine Lebensmittelreste dauerhaft ansammeln können oder diese zumindest leicht entfernbar sein müssen.

Des Weiteren befinden sich an derartigen Wägezellen häufig waagerechte Flächen, Spalten und Vertiefungen, die kaum zugänglich sind und deshalb nur schwer gereinigt werden können, wo sich dann leicht Bakterien, Viren und Pilze festsetzen. Deshalb ist es beim Einsatz von Wägezellen in vielen Bereichen der chemischen, pharmazeutischen, kosmetischen und Lebensmittelindustrie notwendig, dass diese leicht zu reinigen sind und möglichst keine Oberflächenbereiche aufweisen, auf denen sich Schmutz, Lebensmittelreste, Chemikalien, Bakterien, Viren und Pilze festsetzen, eindringen oder bilden können.

Ein hermetisch dichter Messgrößenaufnehmer, der eine Wägezelle darstellt, ist aus der DE 10 2004 047 508 B3 bekannt, der als horizontal einbaubarer Biegebalken ausgebildet ist. Dieser Biegebalken besteht aus einem Krafteinleitungs- und einem Kraftaufnahmeteil, zwischen denen ein Kraftmesselement angeordnet ist. Dabei besteht das Kraftmesselement aus einer vertikalen Biegefeder, die durch zwei gegenläufige horizontale Querbohrungen im mittleren Biegebalkenteil hergestellt wurde und an der beidseitig Dehnungsmessstreifen als Scherkraftaufnehmer appliziert sind, die bei einer Gewichtsbelastung ein proportionales elektrisches Signal erzeugen. Zur hermetischen Abdichtung sind dabei in den Bohrungen napfförmige metallische Blechteile eingeschweißt, die die empfindlichen elektrischen Messelemente hermetisch dicht verschließen. Dadurch wird hauptsächlich verhindert, dass Feuchtigkeit und andere korrodierende Schmutzpartikel mit den empfindlichen Messelementen in Berührung kommen, so dass eine langlebige Wägezelle geschaffen wurde. Diese Wägezelle ist zwar stabförmig und mit weitgehend flachen Außenflächen ausgestattet, wobei sich aber insbesondere auf der horizontal verlaufenden Deckfläche Lebensmittel- oder Flüssigkeitsreste absetzen können, die in Verbindung mit Feuchtigkeit zur Vermehrung von Bakterien oder Viren neigen. Des Weiteren könnten auch in den napfförmigen Vertiefungen Schmutz- und Lebensmittelbestandteile anhaften, die nur schwer zu reinigen sind, und in denen sich Pilze und Bakterien bilden könnten. Deshalb ist eine derartige auch hermetisch abgedichtete Wägezelle in aseptischen Bereichen nach einschlägigen Hygienevorschriften oft nicht einsetzbar.

Aus der DE 37 15 572 A1 ist eine Wägezelle für eine elektromechanische Plattformwaage bekannt, die im Wesentlichen aus einem zylindrischen Rundstab besteht, von dem zumindest rieselfähige Lebensmittel und Flüssigkeiten mittels Schwerkraft ablaufen würden. Dabei ist eine Seite des Biegestabes mittels zweier Schrauben am Waagengehäuse befestigt, während das gegenüberliegende Ende als abgeflachter Rundstab mit der Wägeplattform in Verbindung steht, wobei die Gewichtskraft quer zur Längsrichtung einleitbar ist. Allerdings dürften bei dieser Wägezelle auf der Oberfläche des Biegestabes zur Erzeugung der elektrischen Messsignale die Dehnungsmessstreifen appliziert sein, so dass eine derartige Wägezelle nicht mit wässrigen Reinigungsmitteln gesäubert werden kann und deshalb in der Lebensmittelindustrie oder in aseptischen Bereichen nicht immer einsetzbar ist.

Eine weitere Wägezelle mit zylinderförmigem horizontal angeordnetem Gehäuse ist aus der DE 28 18 140 A1 bekannt, die gegenüber Fremdeinflüssen vollkommen geschützt sein soll. Dabei ist im Gehäusekörper ein horizontaler runder Stab angeordnet, der in einem freitragenden Rohr an dessen einem Endbereich befestigt ist. An dem freitragenden Rohr sind auf dessen äußerer Mantelfläche Dehnungsmessstreifen appliziert, die bei einer vertikalen Krafteinleitung in den Endpunkt des Stabes eine Dehnung auf der äußeren Mantelfläche des Rohres erfassen. Dabei ist das freitragende Rohr von einer zylinderförmigen Verschlusshülse als Gehäuseteil hermetisch dicht verschlossen. Allerdings wird die Krafteinleitung über einen Schraubbolzen in einer mindestens nach unten offenen Kammer ausgeführt, in der eine Krafteinleitungsöse den Stab umgreift, der in dieser offenen Kammer beweglich geführt ist. Da diese Kammer nicht hermetisch verschlossen ist, können darin Schmutz und Flüssigkeitsreste eindringen, die kaum entfernbar sind, so dass diese Wägezelle im Kontakt mit Lebensmitteln nicht verwendbar ist.

Noch eine Wägezelle mit zylinderförmigem horizontal angeordnetem Gehäuse ist aus der EP 2 120 023 A1 bekannt.

Aus der EP 1 698 871 A1 ist ein Einbausatz für eine Wägezelle vorbekannt, der insbesondere im Bereich der chemischen und pharmazeutischen, der Lebensmittel- und Kosmetikindustrie einsetzbar ist. Dabei enthält dieser Einbausatz eine vertikal angeordnete Wägezelle, die zwischen zwei parallelen horizontal angeordneten Montageplatten angeordnet ist. Als Krafteinleitungs- und Kraftausleitungselemente sind offensichtlich zwei runde Druckstücke vorgesehen, zwischen denen die Wägezelle angeordnet ist. Die Wägezelle ist dabei in einem runden, konisch verlaufenden Gehäuse verschlossen angeordnet, das so in die Druckstücke eingreift oder diese umfasst, dass dieser Einbausatz gut reinigbar ist und offensichtlich wenig Spalten und Hohlräume besitzt, in denen sich Bakterien, Viren und Pilze bilden können. Allerdings sind hierbei die Druckstücke als Krafteinleitungs- oder Kraftausleitungselemente nur lose mit der Wägezelle verbunden, so dass eine derartige Wägezelle nur vertikal einbaubar ist und auch nicht fest mit der Waage verbunden werden kann, so dass stets noch ein Einbausatz zusätzlich benötigt wird.

Der Erfindung liegt die Aufgabe zugrunde, eine hermetisch dichte Wägezelle so weiterzuentwickeln, dass diese leicht zu reinigen ist und keine Spalten, Vertiefungen und waagerechten Flächenteile enthält, in und auf denen sich Rückstände, Schmutz, Bakterien, Viren oder Pilze festsetzen oder vermehren können, so dass sie auch in aseptischer Umgebung, insbesondere in Anlagen zur Lebensmittelverarbeitung, einsetzbar ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Wägezelle gemäß der Erfindung hat den Vorteil, dass sie wegen der horizontalen Einbaulage auch nur vertikal abfallende Flächenteile aufweist, so dass alle damit in Verbindung kommenden Lebensmittel, Kosmetika- oder Pharmabestandteile sich nur schwer festsetzen können, wodurch eine Pilz-, Viren- oder Bakterienbildung weitgehend verhindert wird. Durch die verschweißte Kapselung der Wägezelle ist diese auch gut mit wässrigen Lösungen reinigbar und desinfizierbar, so dass derartige Wägezellen vorteilhafterweise auch im aseptischen Bereich einsetzbar sind.

Durch die integrierte Überlastsicherung hat die Wägezelle gemäß der Erfindung zusätzlich den Vorteil, dass sich hierdurch weder das Bauvolumen der Wägezelle erhöht, noch ungekapselte Teile der Überlastvorrichtung schmutzempfindlich nach außen ragen. Dabei hat die Überlastsicherung zusätzlich den Vorteil, dass sie weitgehend aus dem monolithischen Kraftmesselement durch einen bei dem Biegebalkengrundkörper auszuführenden Fräs- und Bohrvorgang auf einfache Weise vorzugsweise mit einer programmgesteuerten Werkzeugmaschine herstellbar ist, so dass nur noch die frei erhältlichen Passstifte einzusetzen sind. Die Wägezelle gemäß der Erfindung hat gleichzeitig den Vorteil, dass die Herstellung des Überlastschutzes auch keine zusätzliche Montagezeit und keine manuellen Justierarbeiten erfordert. Da derartige Passstifte in hohen Genauigkeitsklassen als kostengünstige Serienteile erhältlich sind, können vorteilhafterweise mit einfachen Bearbeitungsverfahren die sehr kleinen Spaltweiten sehr genau hergestellt werden, so dass die erfindungsgemäße Überlastsicherung sehr zuverlässig die Dehnungsmessstreifen vor auftretenden Überlastungen schützt.

Durch die quer zur Längsrichtung angeordneten Passstifte wird vorteilhafterweise gleichzeitig erreicht, dass die Überlastsicherung gleichmäßig über die gesamte Breite des Kraftmesselements wirksam ist, so dass insbesondere eine Verdrehung des Biegebalkens um die Längsachse bei außermittiger Krafteinleitung verhindert wird.

Bei einer besonderen Ausführung der Erfindung ist vorgesehen, zwei Passstifte zur Begrenzung des beweglichen Biegebalkenteils in beiden vertikalen Richtungen einzusetzen, wodurch vorteilhafterweise gleichzeitig ein Überlastschutz in Zug- und Druckrichtung erreichbar ist, der die Dehnungsmessstreifen in den beiden möglichen Bewegungsrichtungen des Biegebalkenteils vor Überlast schützt.

Bei einer weiteren besonderen Ausführung der Erfindung ist vorgesehen, die Wägezelle durch einfache O-Ring-Dichtungen gegenüber deren Befestigungsteilen abzudichten und durch Zentrierstifte zu zentrieren, was den Vorteil hat, dass auch an den Verbindungsflächen weder Keime noch kleinste Schmutzpartikel eindringen können, ohne dass dies zu einer instabilen Lagerung oder Verdrehung an den Verbindungsflächen führen würde. Dabei hat insbesondere eine am Außenumfang des Krafteinleitungs- oder Kraftausleitungselements angeordnete O-Ring-Dichtung den Vorteil, dass auch beim Reinigen keine keimbildende Flüssigkeit durch Kapillarwirkung in den Spalt zwischen den Verbindungsflächen eindringen kann.

Gleichzeitig hat die Zentrierung den Vorteil, dass mit serienmäßigen Befestigungsschrauben und mindestens zwei einfachen Zentrierstiften die schwimmende Lagerung der Verbindungsflächen genau fixierbar ist, ohne dass die Kraftrichtung von der Messrichtung abweichen würde. Mit einer derartigen Abdichtung und Zentrierung ist vorteilhafterweise sowohl das Krafteinleitungs- als auch das Kraftausleitungselement gegenüber seinen Befestigungsteilen abdichtbar.

Bei einer weiteren besonderen Ausführungsart der Erfindung ist vorgesehen, das Kraftmesselement als Doppelbiegebalken auszubilden, mit dem vorteilhafterweise sehr hohe Messgenauigkeiten erzielbar sind. Mit derartigen Wägezellen sind deshalb vorteilhafterweise auch eichpflichtige Waagen herstellbar.

Bei einer anderen besonderen Ausführungsart sind die Ringelemente umlaufend so verjüngt, dass sie Membranen bilden, wodurch vorteilhafterweise ein rundum gekapseltes Messelement entsteht, das nach außen glatte abgerundete gut reinigbare Oberflächen aufweist, ohne eine nennenswerte Kraftnebenschlusswirkung auf das eigentliche Messelement auszuüben, wodurch gleichzeitig auch eine hohe Messgenauigkeit gewährleistet wird.

Durch die spezielle nahezu zylindrische Ausführung der Krafteinleitungs- und Kraftausleitungselemente wird vorteilhafterweise eine Ausführung erreicht, die in flachen Plattformwaagen einsetzbar ist. Dabei sind die Krafteinleitungs- und Kraftausleitungselemente mit parallelen vertikalen, zentrierten und abgedichteten Stirnflächen als Befestigungsflächen ausgestattet, so dass sie vorteilhafterweise eine gut abtropfende dichte vertikale Befestigung erlauben.

Die Erfindung wird anhand eines Ausführungsbeispiels, das in der Zeichnung dargestellt ist, näher erläutert. Es zeigen:
- Fig. 1:: eine hermetisch dichte Wägezelle mit vertikalen Befestigungsflächen;
- Fig. 2:: eine hermetisch abgedichtete Wägezelle mit innenliegender Überlastsicherung;
- Fig. 3:: eine Seitenansicht eines Krafteinleitungselements der Wägezelle mit zentriertem und abgedichtetem Befestigungsteil einer Wägeplattform;
- Fig. 4:: eine Vorderansicht eines zentrier- und abdichtbaren Krafteinleitungselements; und
- Fig. 5:: eine Seitenansicht des Krafteinleitungselements mit Schnittbild eines Zentrierstifts.

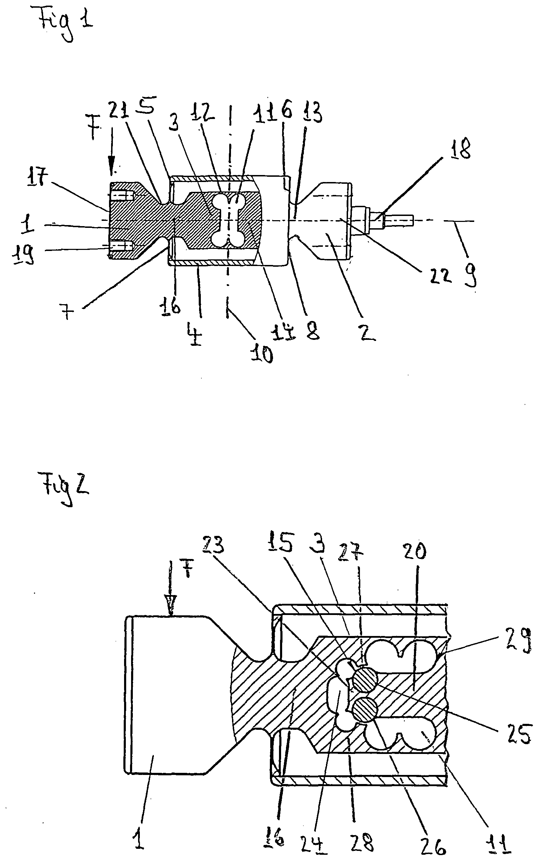

In Fig. 1 der Zeichnung ist eine hermetisch abgedichtete Wägezelle dargestellt, die rotationssymmetrisch ausgebildet ist, wobei in Längsrichtung zwischen dem Krafteinleitungs- 1 und Kraftausleitungselement 2 ein beispielsweise als Doppelbiegebalken ausgebildeter Biegebalken 3 angeordnet ist, der durch zwei an seinen Endbereichen vorgesehene Ringelemente 5, 6 und eine damit verschweißte Rohrhülse 4 verschlossen ist, wobei die Ringelemente 5, 6 konzentrisch umlaufende Dünnstellen als Membrane 7, 8 enthalten, die die Rohrhülse 4 biegeweich mit dem Krafteinleitungs- 1 und dem Kraftausleitungselement 2 und dem Biegebalken 3 verbinden. Der Biegebalken 3 ist im Folgenden teilweise als Doppelbiegebalken 3 bezeichnet, sofern bei der jeweils beschriebenen Ausführungsform der Wägezelle ein solcher Doppelbiegebalken vorgesehen ist.

Die Wägezelle besteht im Grunde aus einem zentralen Längskörper, aus dem das Krafteinleitungselement 1, das Kraftausleitungselement 2, der Doppelbiegebalken 3 und die beiden Ringelemente 5, 6 herausgearbeitet sind. Der Längskörper besteht dabei vorzugsweise aus einem hochwertigen rostfreien biegeelastischen Edelstahl, wobei im fertigen Zustand die Rohrhülse 4 über den Längskörper gestülpt und mit den beiden Ringelementen 5, 6 luftdicht verschweißt ist. Bei einer Wägezelle mit 10 kg Nennlast ist der zentrale Längskörper vorzugsweise 120 mm lang und etwa 40 mm im Durchmesser. Zwischen dem Krafteinleitungselement 1 und dem Kraftausleitungselement 2 ist der Doppelbiegebalken 3 angeordnet, der einen quaderförmigen Mittelteil 14 enthält. Symmetrisch zu einer Längsachse 9 und einer Querachse 10 ist im Mittelteil 14 eine horizontale Aussparung 11 vorgesehen, die durch vier horizontale Bohrungen einen kleeblattartigen Querschnitt aufweist. Dadurch entstehen an den beiden parallelen horizontalen Deckflächen des Mittelteils 14 als Biegefedern ausgebildete Stege als Messfederteile 12, auf denen vorzugsweise acht Dehnungsmessstreifen appliziert sind, die bei einer vertikalen Kraftbelastung ein elektrisches Signal erzeugen, das der eingeleiteten Kraft F wie beispielsweise der Gewichtskraft proportional ist.

An den beiden Enden des Mittelteils 14 sind zwei sich verjüngende runde Verbindungsstücke 13, 16 angebracht, die den Doppelbiegebalken 3 an der einen Seite mit dem Krafteinleitungselement 1 und an der gegenüberliegenden Seite mit dem Kraftausleitungselement 2 verbinden. Etwa in der Mitte jedes der axialen Verbindungsstücke 13, 16 ist quer zur Längsachse 9 jeweils ein Ringelement 5, 6 angebracht, dessen Außendurchmesser dem Innendurchmesser der Rohrhülse 4 entspricht und größer ist als der Durchmesser des Krafteinleitungselements 1 und des Kraftausleitungselements 2 und vorzugsweise ca. 39 mm beträgt. Die beiden Ringelemente 5, 6 sind auf der dem Doppelbiegebalken 3 zugewandten Ringfläche konzentrisch konkav verjüngt und bilden dadurch eine konzentrisch umlaufende erste Membran 7 und zweite Membran 8, deren Dicke vorzugsweise 0,3 mm beträgt.

Im Anschluss an die runden Verbindungsstücke 13, 16, die vorzugsweise einen Durchmesser von 16 mm aufweisen, sind in axialer Richtung seitlich neben dem ersten Verbindungsstück 16 das Krafteinleitungselement 1 und seitlich neben dem zweiten Verbindungsstück 13 das Kraftausleitungselement 2 angebracht, die sich beide durch eine umlaufende Nut 21 nach außen kegelförmig auf vorzugsweise 38 mm Durchmesser erweitern, um dann in eine zylindrische Form von ca. 16 mm Länge überzugehen, die dann in einer flachen Stirnfläche 17 als vertikale Befestigungsfläche endet. Dabei sind sowohl das Krafteinleitungselement 1 als auch das Kraftausleitungselement 2 in ihrer äußeren Form identisch ausgebildet und beide symmetrisch zur Längsachse 9 und Querachse 10 angeordnet. Im Kraftausleitungselement 2 ist in Längsrichtung noch eine zentrale Längsbohrung 22 vorgesehen, die mindestens bis zur Aussparung 11 verläuft und in der die Anschlussleitungen für die Dehnungsmessstreifen geführt sind. Deshalb ist in dem Kraftausleitungselement 2 noch ein Anschlusskabel 18 abgedichtet befestigt, in dem die Anschlussleitungen nach außen abgedichtet geführt sind.

Zur Befestigung der Wägezellen an einem Waagengestell sind auf der Stirnfläche 17 des Kraftausleitungselements 2 noch zwei horizontale Gewindebohrungen 19 angebracht, und zur Befestigung einer Wägeplattform sind ebenfalls an der Stirnfläche des Krafteinleitungselements 1 zwei gleichartige Gewindebohrungen 19 vorgesehen. Dabei stellen die beiden parallelen Stirnflächen 17 vertikale Befestigungsflächen dar, so dass derartige Wägezellen nicht nur für Plattformwaagen, sondern auch für jegliche andere Wägevorrichtungen einsetzbar sind, bei denen die Kraft F senkrecht zur Längsachse 9 in die Stirnfläche 17 der Wägezelle eingeleitet wird.

Nach der Applizierung und Verdrahtung der Dehnungsmessstreifen wird der Doppelbiegebalken mittels der übergeschobenen Rohrhülse 4 durch eine Verschweißung mit den Ringelementen 5, 6 hermetisch verschlossen. Die Rohrhülse 4 besteht dabei vorzugsweise auch aus einem hochfesten rostfreien Edelstahl, wobei ihre Länge dem Abstand zwischen den beiden Ringelementen 5, 6 entspricht und sie mit deren radialen Außenkanten luftdicht verschweißt wird. Die Rohrhülse 4 ist dabei biegesteif ausgebildet, wobei ihre äußere Mantelfläche nur eine geringe vorgegebene Rauhigkeit aufweist, die vorzugsweise durch eine Elektropolierung herstellbar ist, so dass diese eine gut ablaufende und leicht zu reinigende Oberfläche besitzt.

In Fig. 2 der Zeichnung ist ein Teil einer hermetisch abgedichteten Wägezelle nach Fig. 1 der Zeichnung mit Schnittzeichnung einer innenliegenden Überlastsicherung 15 dargestellt, die innerhalb des Doppelbiegebalkens 3 einen Überlastbalken 20 mit einem Anschlagkopf 23 aufweist, der in eine erweiterte Aussparung bzw. einen erweiterten Aussparungsteil 24 an einem Ende 28 des Biegebalkens 3 zum Krafteinleitungselement 1 hin eingreift, wobei zum erweiterten Aussparungsteil 24 hin auch im Anschlagkopf 23 zwei horizontale Bohrungen 25 eingebracht sind, in die jeweils ein Passstift 26 so fixiert ist, dass seine äußere Mantelfläche einen definierten Spalt 27 zum Anschlag an den beweglichen Teil des Biegebalkens 3 belässt.

Zur Verhinderung einer Überlastung und Beschädigung der empfindlichen Dehnungsmessstreifen wird bei Wägezellen häufig eine Überlastsicherung vorgesehen, die den beweglichen Teil der Wägezelle mindestens in Messrichtung begrenzt. Dazu werden meist im äußeren Bewegungsbereich des Biegebalkens 3 stationäre Begrenzungselemente vorgesehen, die wegen der geringen Auslenkungswege häufig noch genau einstellbar ausgeführt sind.

Da es sich hier um eine außen runde geschlossene Wägezelle handelt, an der keine Schmutzpartikel und Keime anhaften sollen, wäre eine äußere Überlastsicherung ungünstig. Deshalb wurde die Überlastsicherung 15 in der Aussparung 11 des Doppelbiegebalkens 3 integriert, so dass die Überlastsicherung 15 innerhalb des hermetisch abgeschlossenen Bereichs angeordnet ist. Dazu ist in der Aussparung 11 des Doppelbiegebalkens 3 ein axialer horizontaler Überlastbalken 20 angeordnet, der mit dem unbeweglichen starren Ende 29 des Doppelbiegebalkens 3 an seiner Kraftausleitungsseite verbunden ist. Am anderen beweglichen Ende 28 des Doppelbiegebalkens 3 ist zusätzlich ein erweiterter Aussparungsteil 24 vorgesehen, der vorzugsweise durch sechs horizontale Querbohrungen in den monolithischen Mittelteil 14 des Biegebalkens 3 eingebracht ist.

In diesen erweiterten Aussparungsteil 24 ragt der Überlastbalken 20 mit einem Anschlagkopf 23 hinein. Dabei sind im Anschlagkopf 23 und im beweglichen Ende 28 des Biegebalkens 3 zwei parallele horizontale Bohrungen 25 übereinander eingebracht, deren Querschnitt zu mehr als der Hälfte (> 180°) im Anschlagkopf 23 und zu einem restlichen Teil (< 180°) im beweglichen Ende 28 des Biegebalkens 3 angeordnet ist. In die beiden Querschnittsbereiche der Bohrungen 25 des Anschlagkopfs 23 werden zur Fixierung horizontal oben und unten jeweils ein Passstift 26 eingeschoben oder eingepresst, wobei die Passstifte 26 durch ihren Querschnitt von mehr als der Hälfte in den Bohrungsteilen des Anschlagkopfes 23 vertikal fixiert sind. Dabei wird jeder Bohrungsteil zum beweglichen Teil des Biegebalkens 3 hin um den Begrenzungsweg vergrößert hergestellt, so dass dort ein definierter Spalt 27 vorgesehen ist, der zur Begrenzung der Auslenkung des Biegebalkens 3 gegenüber dem starren Überlastbalken 20 dient. Da derartige Passstifte 26 mit hohen Genauigkeiten als Serienteile erhältlich sind, ist eine derartige Überlastsicherung 15 nicht nur hochgenau ausführbar, sondern auch noch kostengünstig. Da bei derartigen Doppelbiegebalken 3 nur vertikale Bewegungen von 0,05 bis 0,15 mm vorgesehen sind, reichen vorgegebene Spaltbreiten von 0,1 bis 0,5 mm meist zur Begrenzung aus.

Eine derartige Überlastsicherung 15 ist auch bei einfachen einseitigen Biegebalken einsetzbar. Im Grunde könnte der Anschlagkopf 23 auch in das starre Kraftausleitungsteil 2 des Biegebalkens 3 hineinragen, wenn der Überlastbalken 20 am beweglichen Teil des Biegebalkens 3 befestigt wäre. Der mit zwei parallelen quer zur Längsrichtung angeordneten Passstiften 26 ausgestattete Biegebalken 3 ist für eine Überlast in Messrichtung (Druck) als auch in umgekehrter Richtung (Zug) ausgelegt. Wenn nur die Überlast in Messrichtung begrenzt werden soll, reicht auch eine Ausführung mit nur einem oberen Passstift 26 aus.

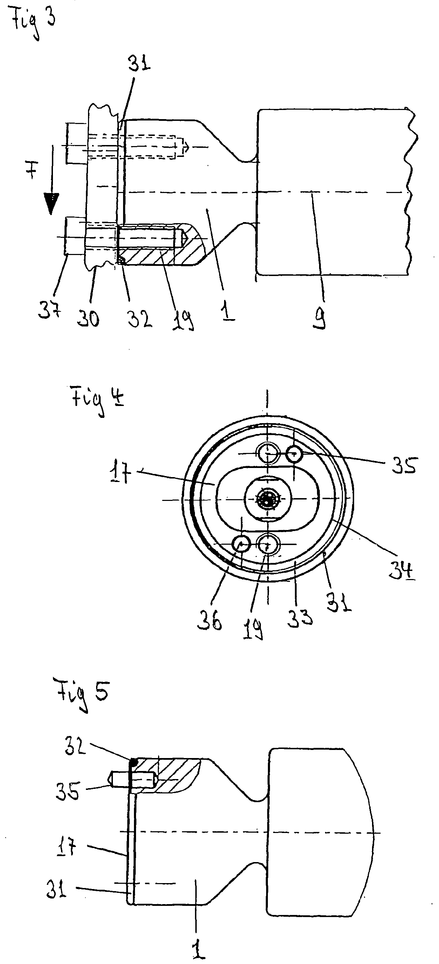

In Fig. 3 bis Fig. 5 der Zeichnung ist ein zentriertes und abgedichtetes Krafteinleitungselement 1 zur Verbesserung der Abdichtung gegenüber anhaftenden Schmutzpartikeln und Keimen und gleichzeitig zur Verbesserung der Messgenauigkeit dargestellt, an dem vorzugsweise ein Befestigungsteil 30 einer Wägeplattform zur Krafteinleitung angeordnet ist. Da eine derartige hermetisch abgedichtete Wägezelle vorzugsweise zur aseptischen Verwendung vorgesehen ist, ist es häufig sinnvoll, dass auch in die Befestigungsspalte keine staubförmigen Verschmutzungspartikel und Keime gelangen können. Durch eine derartige Abdichtung soll sich aber auch die Messgenauigkeit nicht verschlechtern.

Hierzu ist zur besseren Abdichtung zwischen dem Befestigungsteil 30 und der Stirnfläche 17 des Krafteinleitungselements 1 am äußeren Rand der Stirnfläche 17 eine koaxiale äußere Nut 31 eingefräst. In diese Nut wird ein O-Ring 32 zur äußeren Abdichtung zwischen der Außenfläche des Befestigungsteils 30 und dem Randbereich der Stirnfläche 17 eingelegt, durch den eine hermetische Abdichtung erreicht wird, so dass weder Keime noch Schmutzpartikel zwischen diese Anlageflächen gelangen können.

Zur Ausführung der Abdichtung wird das Befestigungsteil 30 mittels einer oder mehrerer Befestigungsschrauben 37 fest mit dem Krafteinleitungselement 1 verschraubt, so dass die Außenfläche des Befestigungsteils 30 fest auf dem äußeren O-Ring 32 aufliegt. Da durch die Abdichtung mit dem elastischen O-Ring 32 zwischen der Stirnfläche 17 und der Außenfläche des Befestigungsteils 30 im Grunde eine schwimmende Lagerung entsteht, die durch ein unvermeidliches Spiel der Befestigungsschrauben 37 und eine mögliche Verdrehung oder eine unterschiedliche Belastung auf der Wägeplattform zu einem Richtungsfehler der Krafteinleitungs- und Kraftmessrichtung führen kann, sind zusätzlich innerhalb der vom äußeren O-Ring 32 umschlossenen Stirnfläche 17 mindestens zwei Zentrierbohrungen 36 vorgesehen. In diese Zentrierbohrungen 36 sind zwei hochgenaue Zentrierstifte 35 eingepasst, so dass die Einleitungsrichtung der Kraft F stets in Messrichtung verläuft. Dabei sind die Zentrierbohrungen 36 vorzugsweise auf dem Umfangskreis der Befestigungsschrauben 37 und in einem Winkelabstand von vorzugsweise 30° von diesen vorgesehen. Bei stärkerer Gewichtskraftbelastung sind auch mehr als zwei Zentrierstifte 35 einsetzbar, die in den Zentrierbohrungen 36 des Krafteinleitungselements 1 und des Befestigungsteils 30 höchstens ein Spiel von 0,01 bis 0,03 mm aufweisen.

Zur weiteren Verbesserung der Abdichtung zwischen dem Befestigungsteil 30 und der Stirnfläche 17 ist zusätzlich noch eine zweite koaxiale innere Nut 33 im Krafteinleitungselement eingebracht, die ebenfalls die Befestigungsschrauben 37 und die Zentrierstifte 35 umschließt und bei einer Schraubbefestigung eine breitere Dichtfläche bewirkt. Eine derartige Abdichtung und Zentrierung ist vorzugsweise auch an dem Kraftausleitungselement 2 vorgesehen, damit dieses gegenüber seinem starren Befestigungsteil auch hermetisch dicht ist. Soweit die Wägezelle nur mit kleineren Kräften unterhalb der Nennlast belastet wird, kann diese auch nur mit dem zentrierten und abgedichteten Krafteinleitungs- und/oder Kraftausleitungselement ohne die Überlastsicherung 15 genutzt werden.

Durch die abgebildete Abdeckung der flachen Stirnflächen 17 durch Befestigungselemente der Wägevorrichtung besitzen alle Ausführungen nur nach unten geneigte abgerundete Oberflächen, an denen rieselfähige oder flüssige Güter nach unten ablaufen können. Da die gesamten Oberflächen der Wägezellen vorzugsweise nur mit einer geringen Rauhigkeit ausgeführt werden, keine Hinterschneidung und keine engen Spalten aufweisen, können daran kaum rieselfähige Güter oder Flüssigkeiten anhaften. Bei einer weiteren Ausführung ist noch vorgesehen, die Wägezellen zusätzlich mit einer schwer anhaftenden Oberflächenbeschichtung zu versehen wie z. B. Polytetrafluorethylen (Teflon®), wodurch eine Anhaftung zusätzlich verhindert wird, rieselfähige oder flüssige Materialien ohne Rückstände abfließen und die Reinigungsmöglichkeit verbessert wird. Es kann sogar auch ohne nennenswerte Reinigungsmaßnahmen eine Keimbildung insbesondere von Krankheitskeimen verhindert werden. Deshalb sind derartige Wägezellen vorzugsweise in der Lebensmittelversorgung einsetzbar, wobei jegliche Keimbildung insbesondere der Krankheitskeime oder deren Vermehrung verhindert werden muss.

Durch die Herstellung der Wägezellen aus Edelstahl und die Verkapselung des Doppelbiegebalkens durch die Verschweißung der Rohrhülse 4 mit den Ringelementen 5, 6 wird ein Eindringen von keimbildenden Stoffen absolut verhindert, so dass derartige Wägezellen auch in aseptischen Bereichen einsetzbar sind. Dabei wird insbesondere durch die beiden Membranen 7, 8 an den Ringflächen eine Entkopplung der eingeleiteten Kraft F erreicht, so dass nahezu keine Kraftnebenschlusskopplung zur biegesteifen Rohrhülse 4 auftritt, so dass eine hohe Messgenauigkeit erreichbar ist. Mit derartigen Wägezellen sind deshalb auch hochgenaue eichfähige Waagen herstellbar. Zudem ist durch die Herstellung der gesamten Wägezelle aus einem hochfesten rostfreien Edelstahl eine derartige Wägezelle auch bei hoher Luftfeuchtigkeit und aggressiven Umgebungseinflüssen verwendbar und stellt deshalb eine sehr langlebige Ausführung dar, die auch von den meisten Chemikalien oder pharmazeutischen Grundstoffen nicht angegriffen wird.

## Patentansprüche

1. Wägezelle, vorzugsweise für eine aseptische Plattformwaage,
- die entlang einer Längsachse (9) stabförmig ausgebildet ist,
- die aus einem Krafteinleitungs- (1) und einem Kraftausleitungselement (2) und einem axial dazwischen angeordneten Kraftmesselement besteht und
- bei der die zu messende Kraft F quer zu der Längsachse (9) einleitbar ist,
- wobei das Kraftmesselement entlang der Längsachse (9) rotationssymmetrisch und abgerundet ausgebildet ist,
- wobei das Kraftmesselement aus einer metallischen Rohrhülse (4) mit einem darin angeordneten Biegebalken (3) besteht, der zwei Verbindungsstücke (13, 16) und ein dazwischen angeordnetes innenliegendes Mittelteil (14) mit Messfederteilen (12) und auf diesen Messfederteilen (12) applizierten Dehnungsmessstreifen aufweist,
- wobei die Enden des Biegebalkens (3) mit quer zu der Längsachse (9) ausgerichteten metallischen Ringelementen (5, 6) verbunden sind, die an ihrem radialen Randbereich mit der Rohrhülse (4) verschweißt sind, so dass der Biegebalken (3) hermetisch dicht eingeschlossen ist, und
- wobei die Ringelemente (5, 6) biegeweiche Stellen enthalten, so dass nahezu keine Kraftnebenschlusskopplung zwischen der Rohrhülse (4) und dem Biegebalken (3) und dem Krafteinleitungs- (1) und dem Kraftausleitungselement (2) auftritt,
**dadurch gekennzeichnet, dass**
- die Rohrhülse (4) biegesteif und das Krafteinleitungselement (1) und das Kraftausleitungselement (2) in Teilen entlang der Längsachse (9) rotationssymmetrisch und abgerundet ausgebildet sind,
- die biegeweichen Stellen der Ringelemente (5, 6) als konzentrisch umlaufende Dünnstellen ausgeführt sind,
- innerhalb des Biegebalkens (3) eine Überlastsicherung (15) vorgesehen ist, die in einer Aussparung (11) des Mittelteils (14) des Biegebalkens (3) einen axialen Überlastbalken (20) mit einem Anschlagkopf (23) umfasst, der in einen erweiterten Aussparungsteil (24) eines Endes (28) des Biegebalkens (3) hineinragt, und
- der erweiterte Aussparungsteil (24) mindestens mit einer Bohrung (25) versehen ist, bei der ein Teil der Querschnittsfläche der Bohrung (25) sich im Ende (28) des Biegebalkens (3) und ein anderer Teil der Querschnittsfläche im Anschlagkopf (23) erstreckt und in die ein Passstift (26) fixiert ist, der einen definierten Spalt (27) zum Ende des Biegebalkens (3) belässt.

2. Wägezelle nach Anspruch 1, wobei der Biegebalken (3) als Doppelbiegebalken mit quaderförmigem Mittelteil (14) ausgebildet ist, und die Aussparung (11) im quaderförmigen Mittelteil (14) derart ausgebildet ist, dass zwei horizontale parallele Stege als Messfederteile (12) entstehen, an denen die Dehnungsmessstreifen appliziert sind.

3. Wägezelle nach Anspruch 1 oder 2, wobei der Überlastbalken (20) horizontal zwischen den Messfederteilen (12) angeordnet ist, in dem erweiterten Aussparungsteil (24) horizontal übereinander zwei Bohrungen (25) für jeweils einen Passstift (26) zwischen dem Anschlagkopf (23) und dem Ende (28) des beweglichen Biegebalkens (3) eingebracht sind, und der eine Passstift (26) den beweglichen Teil des Biegebalkens (3) nach oben und der andere Passstift (26) ihn nach unten begrenzt.

4. Wägezelle nach Anspruch 1, wobei in einer Stirnfläche (17) des Krafteinleitungs- (1) oder des Kraftausleitungselements (2) zur Befestigung einer Wägeplattform oder eines Waagengestells als Befestigungsteil (30) mindestens eine horizontale Gewindebohrung (19) und an mindestens zwei definierten Stellen der Stirnfläche (17) zusätzlich horizontale Zentrierbohrungen (36) angebracht sind, die von mindestens einer konzentrischen Nut (31, 33) umgeben sind, in die zur Abdichtung eines Befestigungsspalts zwischen der Stirnfläche (17) und dem Befestigungsteil (30) mindestens ein O-Ring (32, 34) eingelegt ist.

5. Wägezelle nach Anspruch 4, wobei eine konzentrische äußere Nut (31) am äußeren Rand der Stirnfläche (17) und eine innere Nut (33) dazu koaxial auf einer innenliegenden Fläche der Stirnfläche (17) angeordnet sind.

6. Wägezelle nach einem der vorhergehenden Ansprüche, wobei das entlang der Längsachse (9) angeordnete Krafteinleitungselement (1) und das anschließend um das erste Verbindungsstück (16) angeordnete erste Ringelement (5) sowie der damit verbundene Biegebalken (3) mit dem Überlastbalken (20) und das daran anschließende zweite Verbindungsstück (13) mit dem daran angeordneten zweiten Ringelement (6) und das damit verbundene Kraftausleitungselement (2) einstückig ausgebildet sind.

7. Wägezelle nach einem der vorhergehenden Ansprüche, wobei die Ringelemente (5, 6) um die zentral angeordneten Verbindungsstücke (13, 16) scheibenförmig ausgebildet sind und auf mindestens einem konzentrisch umlaufenden Ringflächenteil konzentrisch so verjüngt sind, dass sie jeweils eine biegeweiche Membran (7, 8) bilden.

8. Wägezelle nach Anspruch 7, wobei die Ringflächenseiten, die zum Biegebalken (3) gerichtet sind, eine konkav umlaufende Vertiefung aufweisen und die zu dem Krafteinleitungselement (1) und dem Kraftausleitungselement (2) gerichteten Ringflächenseiten plan ausgebildet sind.

9. Wägezelle nach einem der vorhergehenden Ansprüche, wobei die äußere Oberfläche der Wägezelle außerhalb der Stirnfläche (17) nur abgerundete Flächenteile aufweist, die eine glatte Oberfläche von geringer Rauhigkeit besitzen.

## Claims

1. A load cell, preferably for an aseptic platform scale, which load cell
- is embodied rod-shaped along a longitudinal axis (9),
- consists of a force input element (1) and a force output element (2) and a force measuring element arranged axially therebetween, and
- in which load cell the force F to be measured is introducible perpendicularly to the longitudinal axis (9),
- wherein the force measuring element is rotationally symmetric and rounded in shape along the longitudinal axis (9),
- wherein the force measuring element consists of a metal tubular sleeve (4) with a bending beam (3) arranged therein, said bending beam comprising two connecting pieces (13, 16) and an inner middle part (14) arranged therebetween, said inner middle part comprising measuring spring portions (12) and strain gauges applied on said measuring spring portions (12),
- wherein the ends of the bending beam (3) are connected to metal ring elements (5, 6) which are oriented transversely to the longitudinal axis (9) and which are welded to the tubular sleeve (4) at their radial edge region such that the bending beam (3) is hermetically tightly enclosed, and
- wherein the ring elements (5, 6) include flexurally soft areas, such that almost no force shunt coupling occurs between the tubular sleeve (4) and the bending beam (3) and the force input element (1) and the force output element (2),
**characterised in that**
- the tubular sleeve (4) is flexurally rigid and the force input element (1) and the force output element (2) are rotationally symmetric and rounded in shape in portions along the longitudinal axis (9),
- the flexurally soft areas of the ring elements (5, 6) are embodied as concentrically encircling thin areas,
- an overload protection means (15) is provided inside the bending beam (3), said overload protection means including an axial overload beam (20) with a stop head (23) in a recess (11) of the middle part (14) of the bending beam (3), said stop head projecting into an extended recess portion (24) of one end (28) of the bending beam (3), and
- the extended recess portion (24) is provided with at least one bore (25), wherein one portion of the cross-section of the bore (25) extends in the end (28) of the bending beam (3) and another portion of the cross-section extends in the stop head (23), and into which bore an alignment pin (26) which leaves a defined gap (27) to the end of the bending beam (3) is fixed.

2. The load cell according to claim 1, wherein the bending beam (3) is embodied as a double bending beam with a block-shaped middle part (14), and the recess (11) is formed in the block-shaped middle part (14) such that two horizontal parallel webs are formed as measuring spring portions (12) on which the strain gauges are applied.

3. The load cell according to claim 1 or 2, wherein the overload beam (20) is arranged horizontally between the measuring spring portions (12), two bores (25) for one alignment pin (26) each are introduced horizontally one above the other in the extended recess portion (24) between the stop head (23) and the end (28) of the movable bending beam (3), and wherein the one alignment pin (26) limits the movable part of the bending beam (3) in the upward direction and the other alignment pin (26) limits it in the downward direction.

4. The load cell according to claim 1, wherein at least one horizontal threaded bore (19) for attaching a weighing platform or scale frame as an attachment part (30) is provided in an end face (17) of the force input element (1) or the force output element (2), and horizontal centring holes (36) are additionally provided at at least two defined locations of the end face (17) and are encircled by at least one concentric groove (31, 33) into which at least one O-ring (32, 34) is laid for sealing an attachment gap between the end face (17) and the attachment part (30).

5. The load cell according to claim 4, wherein a concentric outer groove (31) is provided on the outer rim of the end face (17) and an inner groove (33) is provided coaxially therewith on an inward area of the end face (17).

6. The load cell according to any one of the preceding claims, wherein the force input element (1) arranged along the longitudinal axis (9) and the adjoining first ring element (5) arranged around the first connecting piece (16), as well as the bending beam (3) connected thereto and having the overload beam (20), and the adjoining second connecting piece (13) with the second ring element (6) arranged thereon, and the force output element (2) connected thereto, are integrally embodied.

7. The load cell according to any one of the preceding claims, wherein the ring elements (5, 6) are embodied in the form of discs around the centrally arranged connecting pieces (13, 16) and are concentrically tapered in such a way on at least one concentrically encircling portion of the ring surface portion that they each form a flexurally soft membrane (7, 8).

8. The load cell according to claim 7, wherein the ring surface sides facing the bending beam (3) have a concave encircling indentation, and the ring surface sides facing the force input element (1) and the force output element (2) are planar.

9. The load cell according to any one of the preceding claims, wherein the outer surface of the load cell except for the end face (17) has only rounded surface portions having a smooth surface with low roughness.

## Revendications

1. Cellule de pesage, destinée de préférence à une balance à plateforme aseptique,
- qui est réalisée sous forme de barre le long d'un axe longitudinal (9),
- qui se compose d'un élément d'introduction de force (1), d'un élément de sortie de force (2) et d'un élément de mesure de force disposé axialement entre eux, et
- dans laquelle la force à mesurer F peut être introduite transversalement par rapport à l'axe longitudinal (9),
- dans laquelle l'élément de mesure de force est de forme arrondie et à symétrie de révolution le long de l'axe longitudinal (9),
- dans laquelle l'élément de mesure de force se compose d'une gaine tubulaire (4) métallique dans laquelle est disposée une poutre de flexion (3), laquelle comprend deux pièces de liaison (13, 16), une partie centrale (14) intérieure qui est disposée entre elles et a des parties élastiques de mesure (12), et des bandes de mesure d'allongement appliquées sur ces parties élastiques de mesure (12),
- dans laquelle les extrémités de la poutre de flexion (3) sont reliées à des éléments annulaires (5, 6) métalliques qui sont orientés transversalement par rapport à l'axe longitudinal (9) et soudés à la gaine tubulaire (4) sur leur zone périphérique radiale de telle sorte que la poutre de flexion (3) est enfermée de manière hermétique et étanche, et
- dans laquelle les éléments annulaires (5, 6) contiennent des endroits flexibles de sorte qu'il n'apparaît presque aucun couplage de dérivation de force entre la gaine tubulaire (4), la poutre de flexion (3), l'élément d'introduction de force (1) et l'élément de sortie de force (2),
**caractérisée en ce que**
- la gaine tubulaire (4) est rigide en flexion, et l'élément d'introduction de force (1) et l'élément de sortie de force (2) sont, dans des parties, de forme arrondie et à symétrie de révolution le long de l'axe longitudinal (9),
- les endroits flexibles des éléments annulaires (5, 6) sont conçus comme des endroits minces s'étendant concentriquement,
- à l'intérieur de la poutre de flexion (3) est prévue une sécurité anti-surcharge (15), laquelle comprend, dans un évidement (11) de la partie centrale (14) de la poutre de flexion (3), une poutre de surcharge (20) axiale dotée d'une tête de butée (23) qui pénètre dans une partie évidée étendue (24) d'une extrémité (28) de la poutre de flexion (3), et
- la partie évidée étendue (24) est prévue au moins avec un trou de perçage (25) dont une partie de la surface de section transversale s'étend dans l'extrémité (28) de la poutre de flexion (3) et une autre partie de la surface de section transversale s'étend dans la tête de butée (23) et dans lequel est fixée une goupille de serrage (26) qui laisse un espace défini (27) à l'extrémité de la poutre de flexion (3).

2. Cellule de pesage selon la revendication 1, dans laquelle la poutre de flexion (3) est réalisée sous forme de poutre à double flexion avec une partie centrale (14) parallélépipédique, et dans laquelle l'évidement (11) est réalisé dans la partie centrale (14) parallélépipédique de telle sorte que deux nervures parallèles horizontales sont réalisées sous forme de parties élastiques de mesure (12) sur lesquelles sont appliquées les bandes de mesure d'allongement.

3. Cellule de pesage selon la revendication 1 ou 2, dans laquelle la poutre de surcharge (20) est disposée horizontalement entre les parties élastiques de mesure (12), dans laquelle deux trous de perçage (25) pour respectivement une goupille de serrage (26) entre la tête de butée (23) et l'extrémité (28) de la poutre de flexion (3) mobile sont superposés horizontalement et sont pratiqués dans la partie évidée étendue (24), et dans laquelle ladite goupille de serrage (26) limite la partie mobile de la poutre de flexion (3) vers le haut et l'autre goupille de serrage (26) la limite vers le bas.

4. Cellule de pesage selon la revendication 1, dans laquelle au moins un trou de perçage fileté (19) horizontal et en outre, à au moins deux endroits définis d'une surface frontale (17) de l'élément d'introduction de force (1) ou de l'élément de sortie de force (2), des trous de perçage de centrage (36) horizontaux sont ménagés dans la surface frontale (17) pour fixer une plate-forme de pesage ou un châssis de balance en tant que pièce de fixation (30), lesquels trous sont entourés par au moins une rainure (31, 33) concentrique dans laquelle au moins un anneau torique (32, 34) est inséré pour sceller un espace de fixation entre la surface frontale (17) et la pièce de fixation (30) .

5. Cellule de pesage selon la revendication 4, dans laquelle une rainure extérieure (31) concentrique est disposée sur le bord extérieur de la surface frontale (17) et dans laquelle une rainure intérieure (33) est disposée de manière coaxiale à la rainure extérieure sur une surface interne de la surface frontale (17).

6. Cellule de pesage selon l'une des revendications précédentes, dans laquelle l'élément d'introduction de force (1) disposé le long de l'axe longitudinal (9) et le premier élément annulaire (5) disposé de manière adjacente autour de la première pièce de liaison (16), ainsi que la poutre de flexion (3) qui est dotée de la poutre de surcharge (20) et leur est reliée, la deuxième pièce de liaison (13) qui leur est adjacente et sur laquelle est disposé le deuxième élément annulaire (6), et l'élément de sortie de force (2) qui lui est relié, sont formés d'une seule pièce.

7. Cellule de pesage selon l'une des revendications précédentes, dans laquelle les éléments annulaires (5, 6) sont réalisés sous forme de disques autour des pièces de liaison (13, 16) disposées au centre, et se rétrécissent de manière concentrique sur au moins une partie de surface annulaire s'étendant concentriquement de telle façon qu'ils forment respectivement une membrane (7, 8) flexible.

8. Cellule de pesage selon la revendication 7, dans laquelle les côtés de surface annulaire qui sont orientés vers la poutre de flexion (3) comprennent un renfoncement qui s'étend d'une manière concave, et dans laquelle les côtés de surface annulaire qui sont orientés vers l'élément d'introduction de force (1) et vers l'élément de sortie de force (2) sont réalisés sous forme de plan.

9. Cellule de pesage selon l'une des revendications précédentes, dans laquelle la surface extérieure de la cellule de pesage en dehors de la surface frontale (17) ne comprend que des parties de surface arrondies qui ont une surface lisse de faible rugosité.
